# EUROPEAN PATENT APPLICATION

(11) **EP 4 679 393 A1**
(43) Date of publication of application: **14.01.2026**
(21) Application number: 24770264.0
(22) Date of filing: 02.02.2024
(51) Int. Cl.: G07D 7/00, G06T 7/00, G06V 10/74

(54) **PAPER SHEET HANDLING DEVICE PROVIDED WITH CAMERA DEVICE FOR PHOTOGRAPHING FACE OF PERSON WHO CHARGES PAPER SHEET**

(30) Priority: 10.03.2023 JP 2023037883
(71) Applicant: Japan Cash Machine Co., Ltd., Osaka-shi, Osaka 556-0011 (JP)
(72) Inventor: OKAWA Katsutoshi, Osaka-shi, Osaka 556-0011 (JP); SEKI Toru, Osaka-shi, Osaka 556-0011 (JP)
(74) Representative: Flach Bauer & Partner Patentanwälte mbB
(86) International application number: PCT/JP2024/003519
(87) International publication number: WO 2024/190144

(57) **Abstract**

[Problem]

The document handler provides a different special prize for each of users who have invested valuable documents into validators of the document handler in response to the user's investment records.

[Solution to Problem]

The document handler comprises a validation memory (18) for storing print images of a document output from a document sensor (16), facial images output from a camera (4) and control codes commonly assigned to the print and facial images, and a retrieval comparator (20) for comparing facial images stored in validation memory (18) with the facial images output from camera (4) to display print images, facial images of the user and user's investment history and to provide different special treatment for the user in response to the user's investment records when agreement is made between two kinds of facial images stored in validation memory (18) and output from camera (4).

## Description

### Technical Field

This invention relates to a document handler, in particular of the kind having a camera for taking facial images of a user who inserts valuable documents into the handler.

### Background Art

It has come to more important problems to solve and strengthen countermeasures for gambling addiction in many countries of the world. In advanced countries including Japan that has the most number of gambling addicts, gaming and play facilities need to adopt measures against gambling addiction. In fact, the governments in Germany and Canada are now taking proactive measures against gambling addicts. Casino facilities in other countries including Korea require visitor's ID confirmation with their photo and registrant verification as well as prior declaration of gambling addict by the person himself or herself or near relative. In view of these identifiable materials, casinos may refuse entrance of gambling addicts when responding to the patients. In other words, a visitor's face is identified by a photo image taken by a camera provided in an entrance gate of casino to authenticate non-gambling addicts and to exclude entering of gambling addicts. In accordance with the countermeasure of gambling addicts by the German administration, it needs a huge amount of money for a large-scale manned casino facility that would causes to prevent progress of gambling addiction measures. In this connection, a new bill handler is needed that can be taken care of an inexpensive gambling addict countermeasure.

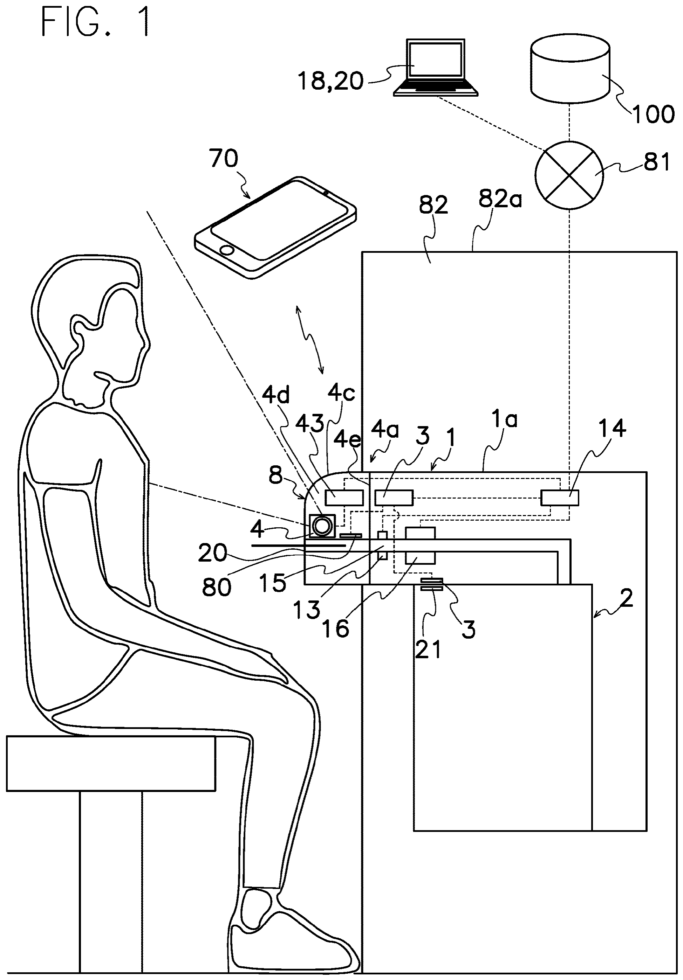

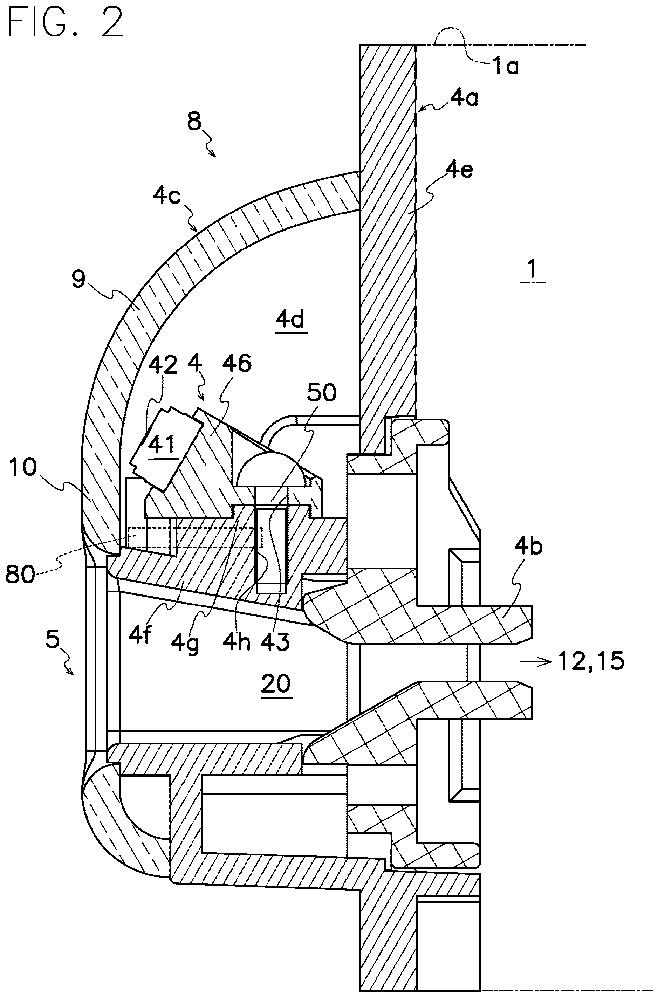

For example, Patent Document 1 below shows a bezel provided for example in a vending machine placed within a company to buy food after authenticating employee's fingerprints, since the bezel comprises a demonstration device for detecting biological information such as fingerprints, retinae, faces and voice recognition, etc. for human authentication. A camera is attached on top of the bezel to take facial images of an employee at the same time the vending machine takes images of a bill inserted into the machine to ensure security against unauthorized use of the machine. The camera provided on the bezel has a flashtube to shine a flash to the buyer's face and takes precise facial images for the personal identification display. Patent Document 2 discloses a management system for amusement halls that comprises a camera (in a camera window 23a of Fig. 2) provided in a calculation rental unit into which bills are inserted to take facial images of a player. The facial images are registered in a database in a control server in connection with an entertainment data in a member's card of the player, and the management system may restrict entertainment by the player when entertainment data shows that he or she meets the requirements of gambling addiction (for example extra-expensive investment amount or unusually long entertainment time), informing him or her of the facts. Patent Document 3 discloses an entertainment system for restricting a player's game in a support terminal similarly to that in Patent Document 2. Patent Document 4 demonstrates a payment vending machine of value recording media in an entertainment store that comprises a bill handling apparatus into which bills may be inserted, and a camera (Fig. 1) built in the apparatus for taking photos of a user to identify a criminal who has inserted a fake bill into the apparatus.

### Prior Art Documents

### Patent Literature

Patent Document 1: US Patent Disclosure No. 2020/0168022A1
Patent Document 2: Japanese Patent No. 6,924,100
Patent Document 3: Japanese Patent No. 7,075,801
Patent Document 4: Japanese Patent Disclosure No. 2008-307163

### Summary of Invention

### Technical Problem

The bezel shown in Patent Document 1 includes a plurality of cameras each attached to an outer surface of the bezel to take and preserve user's facial images when he or she puts a bill into a validator. However, the validator of Patent Document 1 cannot confirm the user's past invested money amount to give them any special reward suitable to the invested amount of money. No special entertainment or service can similarly be given in any of remaining Patent Document 2 to 4. The wording "special reward" or "different treatment" herein means for example different measures or presentation given to each user depending on his or her investment records. The document handler according to the present invention, may record a user who inserts a document into the handler and the invested achievement of each user to provide each user with different treatment or special award depending on the user's investment history. The document handler is worth the repeated investment into the validator by many users. Accordingly, an object of the invention is to provide a document handler that may identify repeat users who repetitively insert monetary media into the handler by repetition to provide users with different special awards, treatments or services in response to the users' investment history in order to promote usage of the handler.

### Solution to Problem

The document handler according to the present invention, comprises a validator (1) provided with a conveyer (17) for transporting a document along a passageway(15) that is put into the validator (1) through an inlet (12), a document sensor (16) for photoelectrically taking print images on the document moving along the passageway (15) of the validator (1) to produce the print image signals, a validation controller (14) for receiving the print image signals from the document sensor (16) to compare the received print image signals with a legitimate print image signals to judge authenticity of the document, a camera (4) for photoelectrically taking facial images of a user to produce the facial image signals, a validation memory (18) for storing under the same control codes the print image signals from the document sensor (16) and the facial image signals from the camera (4) and a retrieval comparator (20) for looking for and comparing two kinds of facial image signals stored in the validation memory (18) and forwarded from the camera (4) to display the print images, the facial images of the user and the investment history when an agreement is made between two kinds of facial image signals from the camera (4) and stored in the validation memory (18).

In the document handler according to the present invention, the validation controller (14) may make validation memory (18) automatically store the print images from the document sensor (16), facial images from the camera (4) and control codes commonly assigned to the print and facial images. Then, the retrieval comparator (20) may compare two kinds of facial images stored in the validation memory (18) and output from the camera (4) and if two kinds of facial images correspond to each other, retrieval comparator (20) may provide the user with various special awards, treatments or services in response to the investment records to promote entertainment and convenience of a document handler (200). From a different viewpoint, validation memory (18) may save facial images such as missing persons, suspects and criminals to search the facial images in view of facial features input in validation memory (18). If the saved and searched facial images may match each other, the information may be represented to respond to cooperate investigation by searchers or the police.

### Brief Description of Drawings

[Figure 1] A sectional view of a document handler of the invention with a validator to insert a bill into;
[Figure 2] An expanded sectional view of a bezel attached to the validator;
[Figure 3] An exploded sectional view of the bezel to attach a camera thereto;
[Figure 4] A sectional view of an inlet rim of the bezel with the attached camera;
[Figure 5] A perspective view of the inlet rim of the bezel to attach the camera;
[Figure 6] A perspective view of the inlet rim of the bezel after attaching the camera;
[Figure 7] A perspective view of the bezel before attaching a cover thereto;
[Figure 8] A perspective view of electric wiring hardware connecting the validator and camera of the bezel;
[Figure 9] A block diagram in inner electric configuration of the validator and the camera in the bezel;
[Figure 10] A flow chart of operational sequence by the electric configuration shown in Figure 9;
[Figure 11] A flow chart following Figure 10; and
[Figure 12] A display example showing bill print images, facial images and records of invested bills.

### Embodiments to carry out the invention

Terminologies used herein mean the followings: The "documents" mean valuable documents or monetary media that include bills, currencies, coupon tickets, electric money, electric coupons. The "imperfect documents" or "imperfect bills" mean unacceptable invested materials such as forged or fake bills or coupon tickets. The "provided goods" mean products or services such as prized money or coupon tickets additionally given to a user when the total amount of the monetary media put into validators by the user reaches a predetermined level. The "investment records or history" means all or total paid records by each user. The "special treatment" or "special award" means additional presentation of goods or services to each user based on the investment records or history. The "offered services" mean any one of the followings:
1. Providing a user with additionally offered game or games or with special treatment when the total invested amount into validators by the user reaches a predetermined amount or level;
2. Preventing of further investment into validators when a user repeatedly inserts fake bills into validators; or
3. Preventing of further investment into validators by a user who is considered inappropriate person such as gambling addict or its potential member, anti-social person or forces in view of the investment records or history in the validation memory.

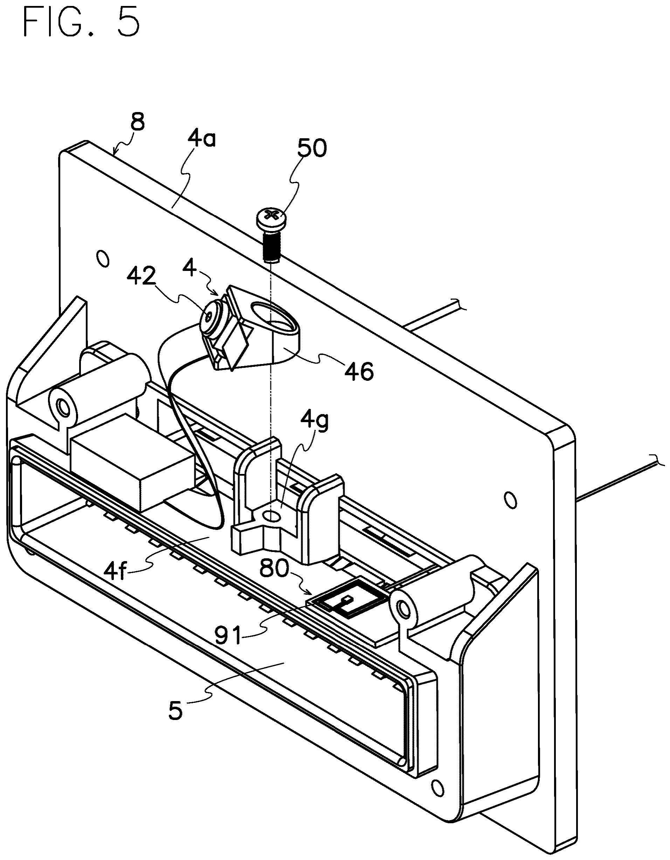

The validator used in the present invention generally targets being valuable media, but embodiments of the invention may show representatively or specifically bills on behalf of valuable media in relation to Figs. 1 to 12, but the other valuable media except bills may obviously be applied to the present invention.

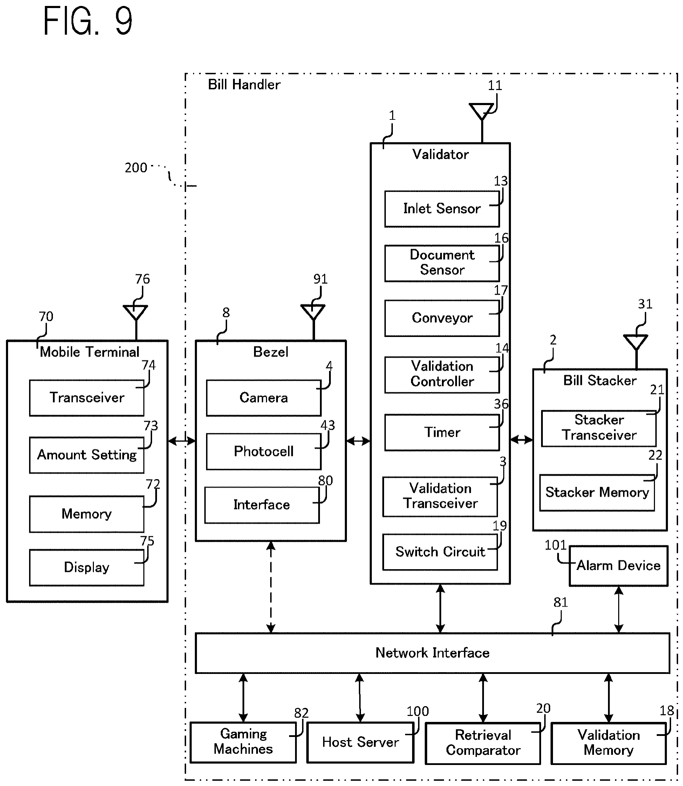

Figs. 1 and 9 show a bill handler (200) according to the present invention applied to the embodiments that comprise a validator (1) having a conveyor (17) for transporting a bill along a passageway (15) that is inserted through an inlet (12) into validator (1), a document sensor (bill sensor) (16) for photoelectrically taking print images of a bill moving along passageway (15) of validator (1) to produce taken print image signals of the bill; a validation controller (14) for receiving print image signals from document sensor (16) to compare received print image signals with print image signals of regular bill and judge authenticity of inserted bill; a camera (4) for photoelectrically taking facial images of a user who puts the bill into validator (1) to produce facial image signals from camera (4); a validation memory (18) for storing print image signals from document sensor (16), facial image signals from camera (4), control codes commonly assigned to print and facial image signals and investment history or records; and a retrieval comparator (20) for looking for and comparing facial image signals stored in validation memory (18) with those from camera (4) to search and display print images, facial images of the user and the investment history when an agreement is made between both of facial image signals from camera (4) and stored in validation memory (18). Before inserting a bill into inlet (12) of validator (1), camera (4) may have started operation to take user's facial images several times and to output the facial image signals. Retrieval comparator (20) may select optimum facial images of user's ones to compare them with past facial images stored in validation memory (18).

Embodiment of the invention shown in Fig. 1, comprises document sensor (16) and validation controller (14) in validator (1) and camera (4) in bezel (8) attached to inlet (12) of validator (1). Validation memory (18) and retrieval comparator (20) are arranged out of validator (1) and are connected in communication through a network interface (81) to document sensor (16) and camera (4). Not shown but, validation memory (18), retrieval comparator (20) and validation controller (14) may be arranged, integrally with, adjacent to or separately from a host server (100). Camera (4) may be attached outside of bezel (8) or inside validator (1). Validation memory (18) and retrieval comparator (20) may be arranged in validator (1).

Bezel (8) in Fig. 1 comprises a cover (4c) made of optically transparent materials that forms in corporation with a frame (4a) a dark room (4d) to arrange camera (4) therein. Cover (4c) may allow outer lights incident to dark room (4d) to photoelectrically take facial images of a user in front of camera (4), but cover (4c) may reflect lights within dark room (4d) to prevent viewing of camera (4) within dark room (4d) from outside dark room (4d). Also, cover (4c) may serve to effectively prevent user's dangerous touch to or tamper with camera (4) to damage it with their hands. Camera (4) has also a further function to take facial images through cover (4c) of a user who is sitting in front of validator (1) and taken facial images are saved in validator (1). Removing cover (4c) from bezel (8) to expose camera (4) outside bezel (8), camera (4) may be driven to take facial images of a user. Otherwise, some audio notice may be given to a user before shooting by camera (4). In another embodiment, camera (4) may be attached to outside of bezel (8) or validator (1) so that camera (4) may be visible to a user without cover (4c).

Bezel (8) shown in Figs. 1 and 2, comprises a frame (4a) secured to a housing (1a) of validator (1), a camera (4) attached to frame (4a) for taking facial images or upper body images of a user in color or black and white, and a cover (4c) removably attached to frame (4a) to conceal camera (4). Frame (4a) is made of plastic materials and cover (4c) is made of glass or plastic materials. In an embodiment of the present invention, cover (4c) is made of glass or optically transparent plastic materials such as acrylic resin or polycarbonate resin covered with optically transparent and optically reflective metallic film by vapor deposition process or coating process of nickel, silver or aluminum, etc. to form a half or magic mirror structure. For example, these processes would be effective to form a half mirror structure on surfaces of cover (4c) so that mirror structure may have a penetration or transmission 30% to 70%, preferably 50% of visible lights to take facial images by camera (4) when it receives lights through invisible cover (4c). Cover (4c) may be detachably attached to frame (4a) by screws or resilient latches to define dark room (4d) for receiving camera (4) concealed with cover (4c).

Camera (4) comprises a shutter and a shutter driver (both unshown), the latter being drivingly connected to validation controller (14) of validator (1) to drive the shutter at the right times to take facial images of a user. To this end, camera (4) may comprise a recognition device (unshown) for detecting a user who sits down on a seat in front of bezel (8) to produce sitting signals which are received by shutter driver to start operation of shutter shooting by camera (4). Shutters may be global shutters or rolling shutters. Global shutters may take front images of a user in the whole frame at once in a short time.

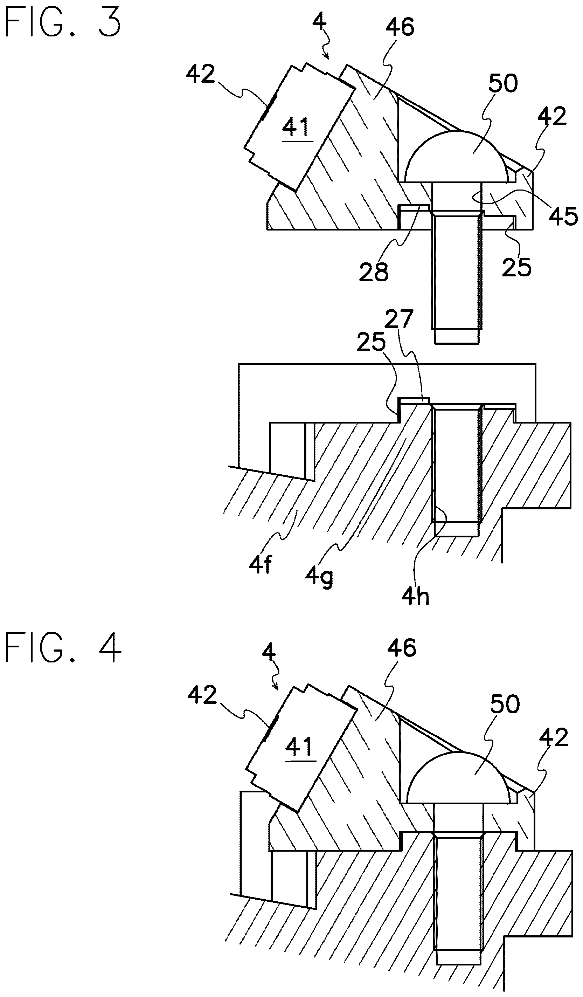

Frame (4a) shown in Fig. 2 comprises a back plate (4e) vertically attached in front of validator (1), an inlet rim (4f) horizontally secured to back plate (4e) to guide a bill inserted into an opening (20) formed within inlet rim (4f) and a table (4g) formed on top of inlet rim (4f) to support camera (4) on table (4g). Camera (4) is mounted on table (4g) of inlet rim (4f) secured to back plate (4e) to place a main optical axis of lens (42) of camera (4) at a predetermined inclined angle between 15° and 30° relative to the horizontal plane as shown in Figs. 2 and 4 so that camera (4) is set to have the view angle coverage between 45° and 80° to the horizontal plane in order to definitely shoot facial images of a user sitting in front of bezel (8).

Camera (4) shown in Figs. 2 to 4, comprises a camera body (41) for supporting a lens (42) incident by lights reflected on user's face, a bracket (46) for supporting camera body (41) and a perforation (45) formed in bracket (46). Table (4g) of inlet rim (4f) has a threaded hole (4h) engaged with a screw (50) when it is vertically put into perforation (45) of bracket (46) to rotatably arrange camera body (41) on a horizontal plane around a vertical shaft of screw (50). It is therefore possible to vary horizontally rotational shooting directions of lens (42) of camera (4) or to change horizontally rotational directions of camera (4) toward user's face in order to set, settle or keep camera (4) in preferable shooting angles. With a spacer (unshown) of appropriate thickness inserted between table (4g) and bracket (46), a shaft of screw (50) may be inserted into a through-hole formed in the spacer to adjust vertical position of camera (4) together with bracket (46) with respect to table (4g) so that the angle of photos to be taken and heights of camera (4) may be regulated to secure desired photo images. Horizontal and vertical positions of camera (4) relative to table (4g), may be automatically and finely adjusted utilizing actuators (not shown) such as servomotors. Actuators are operated following trucking a sitting situation of the user by infrared rays from sensors to set the photo-angles and photo-positions of camera (4) for taking preferable facial images of a user.

To temporally stop rotation of camera (4) around screw (50) for fixture of camera (4), embodiment shown in Fig. 3 illustrates circumferentially intermittent annular projections (27) formed with table (4g) of frame (4a) and bracket (46) of camera body (41) formed with circumferentially intermittent annular grooves (28) in parallel with annular projections (27). When bracket (46) is put and rotated on table (4g) of frame (4a), annular grooves (28) of bracket (46) may come into engagement with annular projections (27) of table (4g) and then screw (50) is tightened into threaded hole (4h) to prevent rotation of camera (4) and bracket (46) around screw (50). Loosing screw (50) to slightly lift bracket (46) from table (4g), annular projections (27) are released from annular grooves (28) to rotate bracket (46) and camera (4) to a desired angular position where annular projections (27) may be engaged with annular grooves (28) and then, screw (50) is tightened to bar rotation of camera (4).

In an adverse mating structure of annular projections (27) and grooves (28), annular projections (27) may be formed in bracket (46) and annular grooves (28) may be formed in table (4g). In other words, annular projections (27) may be formed in one of table (4g) of frame (4a) and bracket (46) of camera body (41) whereas annular grooves (28) may be formed in the other of table (4g) of frame (4a) and bracket (46) of camera body (41) to rotatably fit annular projections (27) within annular grooves (28). In this way, annular projections (27) may be rotatably snugged within annular grooves (28) to firmly or rotatably support camera (4) around annular projections (27) and grooves (28).

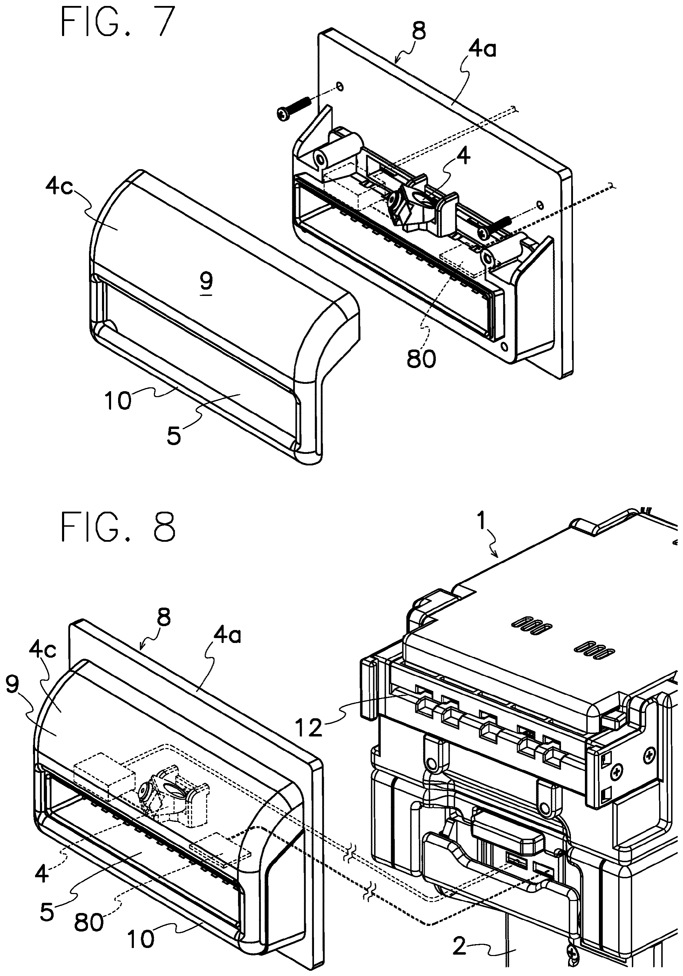

Back plate (4e) of frame (4a) is removably attached to a front face of validator (1) by known means unshown such as screws, resilient latch or hook. In assembling bill handler shown in Figs. 7 to 9 that comprises validator (1), bezel (8) and stacker (2) (Fig. 8), bezel (8) is attached to validator (1), before or after attaching cover (4c) to frame (4a) of bezel (8), and box-like stacker (2) with a handle is also attached to validator (1). With lead wires electrically connected between camera (4) in bezel (8) and input-output ports provided in a front surface of validator (1) through interface (80), electric power is supplied to camera (4) and interface (80) from validator (1) for information communication among camera (4), interface (80) and validator (1).

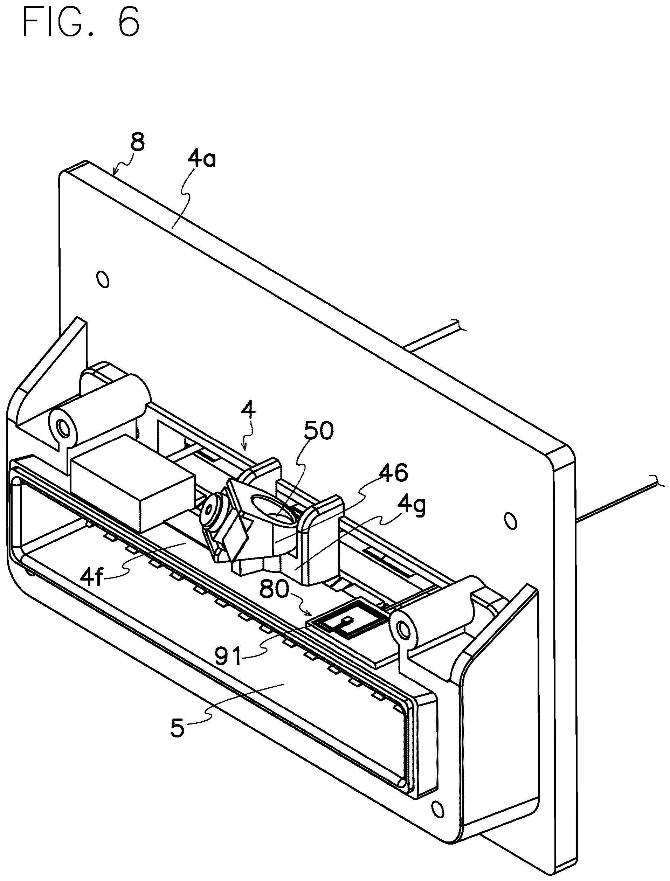

Inlet rim (4f) of frame (4a) illustrated in Figs. 2 and 6, comprises an inlet opening (5) connected to bill inlet (12) of validator (1). Table (4g) is formed on top of inlet rim (4f). Cover (4c) comprises a curved upside (9) for defining dark room (4d) to invisibly from outside arrange camera (4) therein, and a rectangular casing (10) integrally connected to the bottom of curved upside (9). When a bill is inserted into inlet opening (5) of inlet rim (4f), it is detected by inlet sensor (13) provided in bill inlet (12) of validator (1) without any other bill detector attached to bezel (8). Frame (4a) depicted in FIG. 2 includes a connector (4b) arranged behind inlet rim (4f) and secured to frame (4a) in front of validator (1). Inlet opening (5) of inlet rim (4f) and connector (4b) serve to positively guide an inserted bill to bill inlet (12) and inlet sensor (13) of validator (1). After starting shooting of camera (4), inlet sensor (13) of validator (1) detects a bill inserted into inlet opening (5) of inlet rim (4f) to produce detection signals to trigger conveyor (17) of validator (1).

Camera (4) shown in Figs. 1 and 2 comprises a photocell (43) (Fig. 9) for photoelectrically converting facial image information of a user through lens (42) into electric signals that are forwarded to validation controller (14) of validator (1). Both of a shutter actuator not shown in camera (4) and photocell (43) are electrically connected to validation controller (14) of validator (1). Camera (4) comprises a sitting sensor (not shown) for detecting sitting of a user (who inserts a bill) of bill handler (200) to produce detection signals. Otherwise, known human motion sensor or seating sensor may be used to detect approach of a user. Before inserting a bill into inlet opening (5) by a user, a human motion or seating sensor may be detected to produce detection signals, and in synchronization of detection signals of the sensor, shutter of camera (4) may be driven to surely take facial images of the user seating in front of camera (4). Before or after taking by camera (4), inlet sensor (13) of validator (1) may detect a bill inserted into inlet opening (5) of inlet rim (4f) to produce detection signals which trigger conveyor (17) of validator (1). In another embodiment of the invention, without human motion or seating sensor, detection signals from inlet sensor (13) may serve to trigger conveyor (17) of validator (1) and camera (4).

Even in a standby condition of validator (1), a seating detector of camera (4) may be operated in advance to pre-shoot by camera (4) and to make sure or identify facial images of a user before authentic operation of shutter. If camera (4) is operated in synchronization with detection signals of inlet sensor (13), there would be a risk that a user may look away his or her face from camera (4). If camera (4) begins shooting by signals of human motion sensor, it may record situations immediately before a seated user inserting a bill into inlet opening (5) (at the moment he or she looks at camera (4)). Thereby, camera (4) may take optimum facial images of a user before insertion of bill in his or her non-stationary or unconscious state. In other words, camera (4) may preferably take facial images within an effective face-direction threshold, avoiding "blurred images" of "moving subjects", and it would be preferable to select better facial images of continuously shot ten (10) facial images. Since a user sees bezel (8) at least once when inserting a bill to bezel (8), it would be desirable to catch optimum facial images by camera (4) with the effective face-direction threshold.

Validator (1) shown in Figs. 1 and 2 comprises a passageway (15) communicated with inlet opening (5) of frame (4f) and with inlet (12), a conveyor (17) illustrated in Fig. 9 for transporting along a passageway (15) back a bill inserted into inlet (12), a document sensor (16) like a closely contact image sensor for scanning print images of a bill moved along passageway (15) and a validation memory (18) for storing print images of the bill extracted by document sensor (16). A validation controller (14) may as necessary feed back print images of bills stored in validation memory (18). Validation memory (18) may also store the same control codes that are commonly assigned to related facial images output from camera (4) and bill images output from document sensor (16) to form systematic databases of user aggregates built under the various bases such as bill-denomination, user personal face or facial contour so that a retrieve comparator (20) with electronic computers may easily and rapidly search the information in systematic user databases. Validation memory (18) may make control symbols to include for example, numerals, alphabets, codes or these combinations to automatically assign control codes or symbols to user aggregates that can be managed by databases.

Camera (4) comprises various associated equipment not shown such as a face detector for finding facial outlines and positions of facial features indicated on digital facial images of users who are just utilizing bill handler (200) and a calculator for computing sizes of facial outlines in digital images, distances among facial features and ratios between sizes of facial outlines and distances among facial features. Face detector may utilize known image pattern recognition programs to decide facial outlines and positions of facial features in view of users' digital images. Extracting features from users' facial images (the facial image feature extraction method), validation controller (14) may receive facial images from camera (4) and then, face detector in validation controller (14) may extract sizes of users' facial outlines, distances among facial elements such as two eyes, a nose and a mouth and commit them in validation memory (18). Based on facial outlines and positions of facial elements decided by face detector, validation memory (18) may store sizes of facial outlines, facial elements and their distances calculated by computers.

Independently of the authenticity judgement result by validation controller (14), retrieval comparator (20) may look for facial images stored in validation memory (18) through user's facial images to display on a screen of retrieval comparator (20) at once or separately bill print images, user's facial images and investment records or history. Validation memory (18) may associate or link control codes of facial image information searched by retrieval comparator (20) with facial image information and bill image information acquired this time and may store them, adding a new investment history thereto. When retrieval comparator (20) may retrieve past facial image information already stored in validation memory (18), it may add new facial image information shot this time to past facial image information. In this case, retrieval comparator (20) may delete past facial images to only save newly taken facial images in validation memory (18) for effective storage. As validation memory (18) may store facial images and print images of genuine and imperfect bills inserted into inlet (12) of validator (1) by all users to make all the images be retrieved objects by retrieval comparator (20) for improvement in security of bill handler (200) against unauthorized usage of monetary media.

After a user inputs bills into inlet (12) of validator (1), validation memory (18) may calculate and store the total amount of bills considered genuine by validation controller (14) so that retrieval comparator (20) may make a search for facial images of the user whose invested total amount of bills exceeds the predetermined level to offer, to the user at the moment or at the later injection of money, a prize or special treatment responsive to his or her investment history or records in order to encourage and promote utilization of bill handler (200).

Fig. 9 indicates a block diagram in the electrical structure of a bill validator representative of the present invention. Bezel (8) comprises a camera (4) and a photocell (43) (opto-electric converter) built-in camera (4). Bezel (8) is attached to validator (1) that comprises an inlet sensor (13) for detecting a bill inserted into a passageway (15), a conveyor (17) for transporting the inserted bill along passageway (15), a document sensor (16) for scanning print images of the bill moved along passageway (15), a validation controller (14) for receiving detection signals from inlet sensor (13) to drive conveyor (17), a timer (36) for generating clock signals, and a validation transceiver (3) having an antenna (11) for transmitting bill image information. Validation controller (14) receives main print images of bill's main surfaces from document sensor (16) and scanning time records from timer (36) to record print images and scanned time in validation memory (18).

When a user is seated in front of bezel (8), seating detector of camera (4) produces detection signals to operate shutter of camera (4). Then, the user inserts a bill into inlet (12) through inlet opening (5) of frame (4), and inlet sensor (13) generates detection signals each time a bill is inserted into validator (1) to forward detection signals to validation controller (14) that triggers conveyor (17). Therefore, document sensor (16) opto-electrically scans print images of the bill moved along passageway (15) and simultaneously camera (4) consecutively shoots changing facial images of the user to consider mutual agreement ratios between facial image pixels by validation controller (14). Moreover, validation controller (14) may receive facial images of a user and print images of a bill immediately after inlet sensor (13) generates detection signals, and then validation controller (14) makes a pair of these facial and print images in validation memory (18) together with scanning time signals from timer (36). Validation memory (18) also may store sizes of user's facial outlines, distances among facial features such as two eyes, a nose and a mouth.

Validation controller (14) sends print images (bill information) scanned by document sensor (16) from validation transceiver (3) to an outer host server (100) through network interface (80) and antenna (11) connected to validator (1) to compare print images with regular ones recorded in host server (100). When validation controller (14) considers scanned print images the same as regular ones (genuine), it drives conveyor (17) to transport the bill to stacker (2) for storage. Validation controller (14) may compare print images of a bill scanned by document sensor (16) with print images of a regular bill stored in validation memory (18) to judge authenticity of the bill. A stacker transceiver (21) and stacker memory (22) in stacker (2) are electrically connected to validation controller (14) of validator (1). Validation controller (14) forwards digital bill information to stacker transceiver (21) and antenna (31) in stacker (2) through validation transceiver (3) and antenna (11) of validation controller (14) to store digital bill information in stacker memory (22) in stacker (2).

Validation controller (14) compares scanned print images by document sensor (16) with regular ones stored in host server (100) or validation memory (18). If validation controller (14) judges these images to be inconsistent, it drives conveyor (17) in the adverse direction to return imperfect bill to inlet (12) of passageway (15) so that a user may receive it through inlet (12) of passageway (15) and inlet opening (5) of bezel (8). Validation controller (14) forwards digital bill information of imperfect bill to antenna (31) and stacker transceiver (21) in the same way as genuine one to store the information in stacker memory (22) of stacker (2). Retrieval comparator (20) shown in Fig. 9 automatically stores, under the same or common control codes, print images output from document sensor (16) and facial images output from camera (4) in validation memory (18).

Unless validation memory (18) stores print and facial images on bills that have been inserted by a person with difficulty in self-control or an antisocial person, retrieval comparator (20) may consider a user as inappropriate if he or she comes under the following in view of facial contour sizes, distances between facial features and their ratios calculated by computers in validation controller (14) to automatically search for facial image information for display:
a. One who has inserted bills into the same or different validator (1) over a certain amount of money within a certain period of time;
b. One who has inserted bills more than twice of different money amount into one or plural validators (1);
c. One who has inserted bills more than three times of different money amount into one or plural validators (1);
d. One who has inserted bills at a time interval over two hours into one or plural validators; or
e. One who has continuously inserted bills into a plurality of different validators more than three hours.

Validation memory (18) divides facial images of users into the following five shape features for storage and retrieval comparator (20) decides agreement on these five shape features:
1. Oval shape: Same ratio 1:1 of the vertical length of face from eyebrows to cheeks to the horizontal length between cheeks;
2. Round shape: Ratio 2:3 of the vertical length of face from eyebrows to cheeks compared to horizontal length;
3. Square shape: Ratio 1:2 of the vertical length of face from eyebrows to cheeks compared to horizontal length;
4. Inverted triangular shape: Ratio 3:2 of the vertical length of face from eyebrows to cheeks compared to horizontal length, with a slightly wider area around the temples (the position where a headband would be wrapped); and
5. Long face shape: Ratio 3:2 of the vertical length of face from eyebrows to cheeks compared to horizontal length, with not much roundness at cheeks.

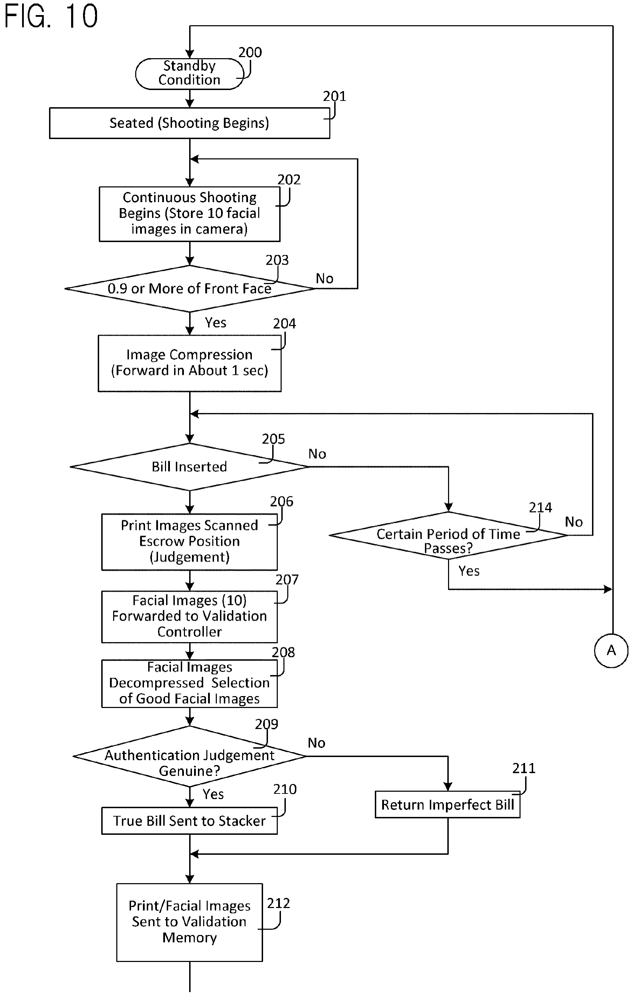

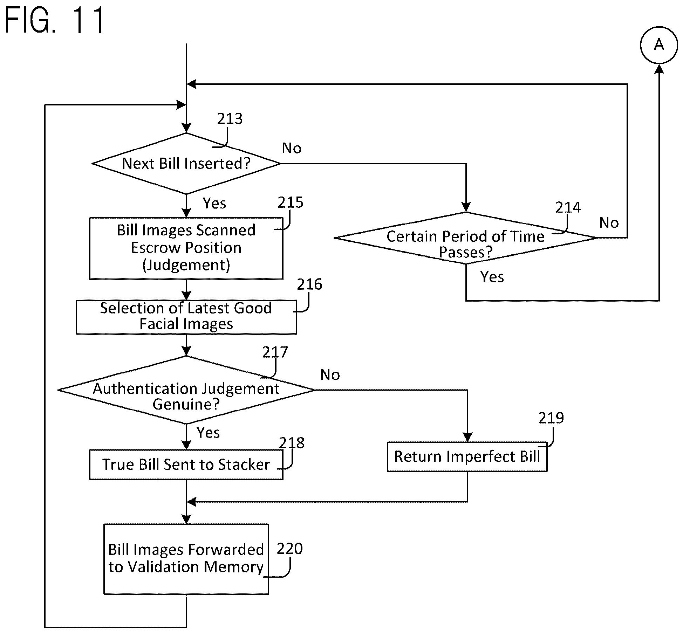

Figs. 10 and 11 indicate continued flowcharts of operational sequence of bill handler (200) working with operation of bezel (8). In a first operation (Step 200), bezel (8) and validator (1) are usually kept in standby mode. When a user (investor, bill inserter, player or customer) sits in front of bezel (8), sitting detector of camera (4) produces detection signals to trigger shutter driver of camera (4) (Step 201) that thereby serially shoots facial images of the user. In Step 202, camera (4) takes changing expression or gesture of a user to send a plurality of facial images to validation controller (14) of validator (1).

In Step 203, validation controller (14) may compress facial images into more than 0.9 pixel units at a constant rate to store them in validation memory (18) (Step 204). In Step 203, if validation controller (14) considers agreement ratio to one another under 0.9 regarding facial images in pixel unit when camera (4) continuously takes facial images of non-stationary user, processing returns to Step 202 for reshooting of camera (4).

Facial images are compressed in Step 204 and stored in validation memory (18) to go to Step 205 where validation controller (14) judges whether to insert a bill into inlet opening (5) of bezel (8) by a user. Unless insertion of the bill into inlet opening (5), processing goes to Step 214 where validation controller (14) judges whether or not a certain period of time has passed after shifting to Step 205. If this is negative, the operation returns to Step 205, but the time has elapsed, the progress returns to Step 200.

When a user inserts a bill into inlet opening (5) of bezel (8) in Step 205, inlet sensor (13) produces detection signals to validation controller (14) that receives detection signals from inlet sensor (13) to drive conveyor (17) that transports the bill along passageway (15). Then, transaction goes to Step 206 where validation controller (14) forwards print image information of bill scanned by document sensor (16) to stacker transceiver (21) through antenna (11), stacker transceiver (21) and antenna (31) for storage of the information in stacker memory (22). At the same time, validation controller (14) drives conveyor (17) to move the bill to an escrow position and stop it there for authenticity judgement of the bill.

Then, camera (4) sends facial image information of the user from photocell (43) to validation controller (14) (Step 207) that selects good facial image information (Step 208). Also, validation controller (14) compares print images of a bill extracted by document sensor (16) with those of a regular bill to judge authenticity of the bill (Step 209). When validation controller (14) judges scanned print images to be consistent with regular ones, it continuously drives conveyor (17) to stacker (2) to stow the bill therein (Step 210). Adversely, when validation controller (14) judges scanned print images to be inconsistent with regular ones in Step 209, it drives conveyor (17) in the reverse direction to return imperfect bill to inlet (12) so that the user may receive it at inlet opening (5) of bezel (8).

Similarly to genuine bills, validation controller (14) forwards digital information of print images of imperfect bills to stacker transceiver (21) and antenna (31) to store their digital information of print images in stacker memory (22) of stacker (2). After validation controller (14) stows the bill considered genuine in stacker (2) (Step 210), it sends print and facial images on the bill and user to validation memory (18) to store them therein (Step 212). After validation controller (14) returns imperfect bill to inlet (12) in Step 211, it sends print and facial images of the bill and user to validation memory (18) to store them therein (Step 212).

Then, proceeding goes from Step 212 to 213 where validation controller (14) judges whether the user inserts a further bill into bezel (8). If this is negative, transaction goes to Step 214 where validation controller (14) decides whether a certain period of time has passed after transition to Step 213 (Step 214). If before the time-up, transaction returns to Step 213, and if the time rises, instructions return to Step 200. When a further bill is inserted into bezel (8) in Step 213, processing goes to Step 215 where in the same way as Step 206 validation controller (14) forwards print image information extracted by document sensor (16) to stacker transceiver (21) to store it in stacker memory (22). When the same user continuously inserts further bills into bezel (8) in Step 213, camera (4) may not newly take facial images of the user, and instead, validation controller (14) may store in validation memory (18) (Step 216) good facial image information selected in Step 208.

Considering scanned print images to be consistent with regular ones in Step 217, validation controller (14) consecutively drives conveyor (17) to transport genuine bill to stacker (2) for storage therein (Step 218), and also, it sends print image information of bill and facial image information of the user to validation memory (18) for storage therein (Step 220), then returning to Step 213. Then, considering scanned print images to be inconsistent with regular ones in Step 217, validation controller (14) drives conveyor (17) in the adverse direction to return imperfect bill to inlet (12) (Step 219) and concurrently sends bill print image and user facial image information to validation memory (18) for storage therein, then returning to Step 213. Operations in Steps 217 through 219 are the same as those in Steps 209 through 211.

In the bill handler (200) of the invention, validation controller (14) forwards print image information of the bill and facial image information of the user to validation memory (18) for storage therein in Step 212. Retrieval comparator (20) compares facial image information output from camera (4) with facial image information stored in validation memory (18). If more than two comparative items are in agreement of sizes of user's face outlines, distances among facial elements such as two eyes, a nose and a mouth and ratios between sizes of face outlines and distances among facial features, retrieval comparator (20) judges the same person between the user who inserts the bill into validator (1) and those stored in validation memory (18). Retrieval comparator (20) may utilize AI facial image recognition systems or pattern recognition devices to judge the user identity. If shot face and stored facial images are consistent, validation controller (14) may look for and display bill print image information, user facial image information and investment history or records and may offer to each user a prize as special treatment responsive to the investment history or records.

Retrieval comparator (20) may compare facial image information output from camera (4) with those stored before in validation memory (18). As validation memory (18) previously retains comparative items such as facial information inclusive of user's face outlines, distances among facial elements such as two eyes, a nose and a mouth and ratios between sizes of face outlines and distances among facial features. When more than any two of the comparative items match each other, retrieval comparator (20) considers that the user who inserts the bill into inlet (12) is the same person as those stored in validation memory (18). Optimum facial images for facial recognition may be selected when an agreement is made in more than a predetermined ratio among bilateral symmetry of facial feature points such as eyes, nose and ears, but explanation is omitted about treatments by known algorithms.

Retrieval comparator (20) compares facial images output from camera (4) with those stored in validation memory (18). When these images are inconsistent with each other, retrieval comparator (20) makes new control codes that may be assigned to facial images and print images of the new user to store the new control codes in validation memory (18). In other words, when a new user inserts a bill into inlet (12) of validator (1), validation controller (14) receives facial images of the user from camera (4) and print images of the bill from document sensor (16) and causes them under the common new control codes to store in validation memory (18) to add them for subsequent search targets by retrieval comparator (20).

Bill handler (200) has the utility value in that many people repeatedly enjoy it with bills so that usage of bill handler (200) may be promoted by first identifying users who repeatedly enjoy bill handler (200) and then providing each of users with a variety of and different special treatment or award in response to his or her investment history or records. Offering these special treatment or award to each user would lead to improvement in entertainment and convenience of bill handler (200). In addition, retrieving and displaying facial image information stored in validation memory (18) would lead to discovery or finding of missing persons, suspects or criminals for cooperation with searchers or the police.

Retrieval comparator (20) may utilize facial image information of a user through which it may retrieve facial image information stored in validation memory (18) to display it on screen. To this end, retrieval comparator (20) may judge identity of facial image information by AI facial image recognition systems or pattern recognition devices provided in face detector of validation memory (18). When a user inserts a bill into inlet (12) of validator (1) and validation controller (14) judges it genuine, validation memory (18) may calculate the total amount the user has until now invested with bill denomination and save them. Retrieval comparator (20) may search for the total amount that exceeds a certain amount and its user's facial image information to give the user an award at that point of time or at the later investment. Retrieval comparator (20) may serve to give the user special treatment responsive to his or her investment history.

Validation controller (14) for judging authenticity of a bill, compares print image information of the bill from document sensor (16) with those of a regular bill recorded in validation memory (18) and if it does not judge bill image information as genuine, validation controller (14) may commit to validation memory (18) imperfect bill image information, user's facial image information and facial image information output from camera (4), linking the bill and facial images by the same control codes. If the same user inserts a next bill into inlet (12) of validator (1) later and it is judged a fake, validation controller (14) then may transmit a disapproval signal to retrieval comparator (20). Consequently, retrieval comparator (20) may retrieve and indicate print image information, user's facial image information and investment history from validation memory (18) stopping operation of validator (1) in response to investment history of the user who has put the fake into validator (1). When a user inserts imperfect bills into validator (1) over a certain number of times, in view of facial image information, validation controller (14) may identify the user and related fake bill to prevent further insertion of bills into validator (1) by the person, promoting proper usage of bill handler (200).

Validation memory (18) saves facial image information of users who are persons with difficulty in self-control or antisocial persons and print image information of bills inserted into validator (1) by them. When facial image information output from camera (4) agrees those person saved in validation memory (18), retrieval comparator (20) may show on a screen bill print image information and facial image information of such user. Validation memory (18) may retain facial image information of inappropriate users such as gambling addicts, potential members of this group and antisocial persons. When facial image information output from camera (4) agrees with those as an inappropriate user stored in validation memory (18), retrieval comparator (20) may automatically search and show the facial image information.

Bill handler (200) shown in Fig. 9 may be installed in gaming houses such as casinos so that it is in communication connection to host server (100) and a plurality of gaming machines through a network interface (81). Gaming machines (82) each have a frame (82a) to hold a validator (1) and control devices electrically connected to validator (1) and gaming machine (82). A plurality of validators (1) are arranged in different places so that they each have conveyor (17) for transporting along passageway (15) a bill inserted into inlet (12) of validator (1). Each of validators (1) is connected to network interface (81) shown in Fig. 9. Each validator (1) comprises a document sensor (16) for photoelectrically taking print images of a bill moving along passageway (15) to produce print image information from document sensor (16), a validation controller (14) for comparing print image information from document sensor (16) with those of a regular bill to judge authenticity of an inserted bill, and a camera (4) for photoelectrically taking facial images of a user who inserts a bill into inlet (12) of validator (1) to produce facial image information. Each validator (1) is connected through network interface (81) to outer units that comprise a validation memory (18) for storing under the same control codes print image information sent from document sensor (16) and facial image information of the user who has inserted the bill into validator (1) independently of the authenticity judgement result by validation controller (14). Outer units further comprise a retrieval comparator (20) for making a search for and showing on screen, facial image information stored in validation memory (18) through facial image information of the user.

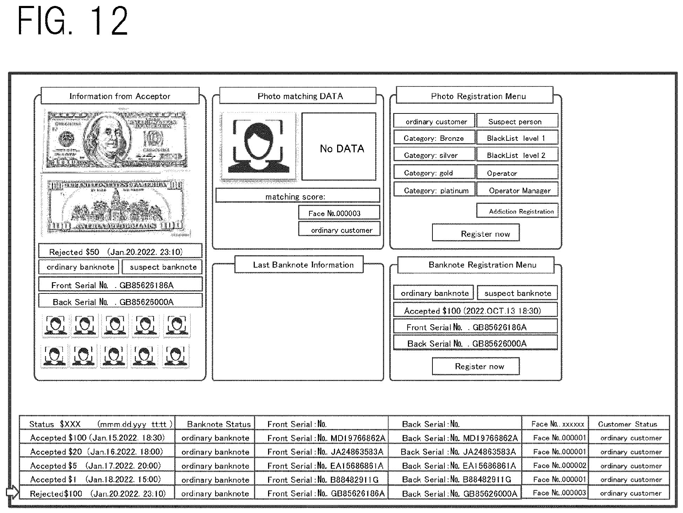

Fig. 12 indicates a displayed example of bill print image information, facial image information and investment history or records of invested bills. Validation memory (18) stores information aggregates that include print images and the number of a bill inserted into inlet (12) of validator (1), facial images of a user shot by camera (4) within bezel ('8) of validator (1) and control codes (Face No.) assigned to the users. When a bill inserted into inlet (12) by a user is an ordinary banknote, facial images are registered in validation memory (18) by the user of normal person. The total invested amount per user is managed so that special treatment will be given to users who have invested to a certain high amount level. For example as special treatment in a casino, coupon tickets may be issued from a printer (not shown) of gaming machine (82) to discount or make it free for goods and services such as drinks, accommodation fees in hotel and transportation costs by such as rentals of car. Related electric coupon tickets may be transmitted to a mobile terminal of a user through host server (100).

When a bill is to be returned to a user as suspect (fake) banknote, facial images of the user is recorded as they consider the user to be a dangerous person after that. Validation memory (18) may record gamble addicts in advance to find out them when retrieval comparator (20) compares two kinds of facial images sent from camera (4) and from validation memory (18) to identify the users as gambling addicts. Otherwise, validation memory (18) may define judging criteria on gambling addiction that include for example investment time, frequency of investment times or increasing ratio of investing amount to stop operation of gaming machine (82) when retrieval comparator (20) considers gambling addicts under the criteria. Host server (100) may be connected with other equipment such as those of countries, local governments, administrative agencies like the police and private organizations like medical facilities that may control gamble addicts, self-control difficulty persons, dangerous persons or antisocial persons so that retrieval comparator (20) may make a search of facial image information about a user whether to identify those persons.

When a user whose facial images are shot by camera (4) is considered gambling addict, controllers of casino or bill handler may add him or her to the addiction registration and renew or register now the information stored in validation memory (18). When the user registered as gambling addict in validation memory (18) tries to operate gaming machine (82), retrieval comparator (20) indicates the addiction registration on display screen to warn controllers about it. With camera (4) attached to bezel (8) in gaming machine (82), casino facilities may take measures against gambling addiction, without any highly expensive authentication system at a usual entrance in casinos. Otherwise, gaming machines may be stopped operation even a player as such inappropriate person inserts a bill into a gaming machine. Facial images may be non-publicly registered avoiding the problem about publicity right infringement.

Embodiments of the present invention may be varied in many ways. For example, bezel (8) may have an interface (80) that can be in remote communication to mobile terminals (70) as shown in Fig. 9 that may be smart phones or tablet terminals with a display (75) such as touch panel. Validation controller (14) may transmit, to transceiver (74) of mobile terminal (70), facial image information stored in validation memory (18) and all the digital bill image information or some thereof stored in stacker memory (22) of stacker (2) to display the facial and bill image information on screen (75) of mobile terminal (70) so that these images may be watched by controllers or stored in a cell memory (72) of mobile terminal (70). As a result of this, controllers may suggest these images on screen (75) to a user who wonders about the invested amount into gaming machine (82).

Facial image information is saved in host server (100) that is in communication connection to validator (1) through network interface (81) and bill image information is retained in stacker memory (22) of stacker (2) and after that facial and bill image information is deleted from validation memory (18) to effectively secure the limited memory capacity. Connecting interface (80) of bezel (8) through network interface (81) to gaming machine (82), warning device (101) and host server (100) for facial images of dangerous persons, host server (100) may compare facial image information sent from photocell (43) of camera (4) with those of dangerous persons saved in host server (100). When these facial images are consistent with each other, host server (100) may stop operation of validator (1) or drive warning device (101) to generate visual or acoustic warning signals for high security effect. Results in comparison judgement between facial images may be forwarded to administrative terminals (not shown) for controllers to view the information and result.

In the forgoing embodiments, if other sensors may be used to trigger camera (4) when they can detect behavior or approach of a user before inserting a bill, camera (4) may start shooting by detection signals from seating detector, human motion sensor or sitting sensor. In the same way as car dashcams, camera (4) may be always operating whose shot images are temporally recorded in a memory. When bill's insertion is detected to extract shot facial images before and after it, user's facial images can be taken that are most suitable to recordation or recognition. Not only static images but also moving images of users may be taken by camera (4) to store them. In this connection, if a user has other person's photo for spoofing to take facial images by camera (4) on behalf of the true user, static images not moving images can not be stored in validation memory (18) to prevent vicarious fraud. Comparing continuously filmed images of a moving user with latest optimum facial images or taken pictures to look for things in common, substitute (impersonation) of the user would be detected by finding out the difference between continuously filmed images and taken pictures. Besides, user's fraud may be recorded into moving images by camera (4) that illegally pulls out a bill through inlet (12) of validator (1) to respond to the misconduct or to report it as a crime proof to the crime investigation agency like the police.

Shot images in bill handler according to the present invention may be applied in various ways. For example, facial authentication may be applied for consumer managements (blacklists, royal consumer listing) and user information managements (gender, age, kind of consumer, time zone, purchase preference, etc.). Bill handler of the invention also may accept not only to valuable papers like bills and coupon tickets, but also to identity verification such as driver's licenses, passports and ID cards. In this case, bill handler may compare facial images for identity verification to identify the user. In another way, bill handler may install application software for registration of gambling addiction (individual application) utilizing facial images taken by camera (4).

Camera (4) may read out 2-dimensional codes to respond to cashless electronics payments. Also, camera (4) may read out 2-dimensional codes indicated on display (75) of mobile terminal (70) like a smart phone for an operation terminal of such as menu for purchase. Moreover, the present invention may be utilized for example, payment of entry fees, entrance and exit management, membership cards, players' cards, award cards, receipt of coupon ticks when purchasing from vending machines (for product exchange, discounts, addition of points), receipt of coupons when purchasing meal tickets (for product exchange, discounts, addition of points, etc.), management of returns for rental equipment (vending machines), substitution of transportation passes, ID management for cash payment terminals, ID management for cash register payment terminals, payments at gas stations (discounts, addition of points), self-checkout payments (discounts, points addition).

Shooting by camera (4) may be used for temperature detection, night vision, substitute for TITO tickets (facial recognition), substitute for player cards or award cards (facial recognition), combined authentication of driver's license and facial images (anti-impostor), observation of players in gaming markets, payments by facial recognition, evidences for recording equipment tampering, analysis of people's movement patterns or crowd information, utilization of motion control, analysis of preferences by facial expression reading during gaming, and behavioral analysis by criminal psychology. Comparing operator's continuous facial images with facial photos on ID cards or driver's license might lead to prevent impersonation of operators. Camera (4) can record videos of operators, adding thereto machine learning on trends in actions and gestures by age to improve accuracy of age verification.

### Industrial Applicability

Bill handler according to the present invention may be applied in various technical fields that utilize valuable media such as bills for example financial laborsaving fields making use of gaming machines, cash automated teller machines, ticket vending machines, payment machines, or automatic sales machines, etc.

### Description of Symbols

(1): A validator; (4): A camera; (4a): A frame; (4b): A connector; (4c): A cover; (4d): A dark room; (5): An inlet opening; (8): A bezel; (9): A curved upside; (10): A rectangular casing; (11): An antenna ; (12): A bill inlet; (13): An inlet sensor; (14): A validation controller; (15): A passageway; (16): A document sensor; (17): Aconveyer; (18): A validation memory; (20): A retrieval comparator; (21): A stacker transceiver; (22): A stacker memory; (27): Annular projections; (28): Annular grooves; (41): A camera body; (42): A lens; (43): A photocell; (45): A perforation; (50): A screw; (80): An interface; (81): A network interface; (82): A gaming machine; (100): A host server; (200): A document handler.

## Claims

1. A document handler comprising:
a validator (1) having a conveyor (17) for transporting along a passageway (15) a document inserted into an inlet (12) of the validator (1),
a document sensor (16) for photoelectrically taking print images of the document moving along the passageway (15) of the validator (1) to produce the print image signals,
a validation controller (14) for comparing the print image signals received from the document sensor (16) with print image signals of the regular document to judge authenticity of the document,
a camera (4) for photoelectrically taking facial images of a user who inserts the document into the validator (1) to produce facial image signals,
a validation memory (18) for storing the print image signals from the document sensor (16), the facial image signals from the camera (4), control codes commonly assigned to the print and facial images and investment history of the user, and
a retrieval comparator (20) for comparing the facial images stored in the validation memory (18) with the facial images sent from the camera (4) to display the print images, facial images and the investment history when the facial image signals in the validation memory (18) are in agreement with those from the camera (4).

2. The document handler of claim 1, wherein, the retrieval comparator (20) may look for and display the facial images stored in validation memory (18) through the user's facial images, regardless of the authenticity judgement result by the validation controller (14).

3. The document handler of claim 1, wherein the validation memory (18) may store the total amount of money that the validation controller (14) judges genuine of the documents inserted into the validator (1) from the inlet (12),
the retrieval comparator (20) makes a search of the facial images of the user whose total invested amount of monetary value exceeds a predetermined level to offer to the user a prize as special treatment responsive to the investment history of the user at that time or at the later insertion of a new document.

4. The document handler of claim 1, wherein the retrieval comparator (20) may compare the facial images stored in the validation memory (18) with the facial images produced from the camera (4), and
when the facial images from the validation memory (18) and from the camera (4) do not match each other, the retrieval comparator (20) makes the validation memory (18) store the different facial images, the print images from the document sensor (16) and control codes commonly assigned to the facial and print images.

5. The document handler of claim 1, wherein the validation memory (18) comprises an information aggregate that comprises the print images output from the document sensor (16), facial images output from the camera (4) and control codes commonly assigned to the print and facial images,
the information aggregate forms systematic user databases built under the various bases by bill-kind, bill-denomination, user personal face or facial contour, and
the retrieve comparator (20) includes electronic computers that may search the systematic user databases.

6. The document handler of claim 1, wherein the validation memory (18) may store denominations of the documents and the total amount of monetary values indicated by the documents considered genuine by the validation controller (14),
the retrieval comparator (20) may look for the facial images of the user whose total amount of monetary values exceeds a predetermined level to offer a prize or special treatment to the user responsive to the investment history of the user.

7. The document handler of claim 1, wherein the validation controller (14) compares the print image signals from the document sensor (16) with the print image signals of the regular document,
when the print image signals from the document sensor (16) do not match the regular ones as genuine, the validation memory (18) stores the imperfect image signals of the document, the user's facial image signals from the camera (4) and the control codes commonly assigned to the facial and print images,
when the validation controller (14) considers the document imperfect that the same user has inserted into inlet (12) of the validator (1), the validation controller (14) forwards a prohibition signal to the retrieval comparator (20),
receiving the prohibition signal, the retrieval comparator (20) makes a search of and displays on screen related print images, facial images and investment history and stops operation of the handler in accordance with the investment history.

8. The document handler of claim 1, wherein when the user who inserts a document into the inlet (12) of the validator (1), is a person with difficulty in self-control or an antisocial person, the validation memory (18) stores the person's facial images and print images,
when the facial images are in agreement with ones inserted by the person with difficulty in self-control or the antisocial person, the retrieval comparator (20) displays on screen the person's facial images and print images.

9. The document handler of claim 1, wherein the validation memory (18) comprises a face detector for detecting sizes of the facial outline and the position of facial features that are shown in digital facial images and a computer unit for calculating the sizes of facial outline shown in the digital facial images, distances between the facial features and proportions between sizes of the facial outline and distances of the position of the facial features, and
the validation memory (18) stores the sizes of the facial outline, distances between the position of the facial features and proportions between sizes of facial outline and distances of the position of the facial features each calculated by the computer unit.

10. The document handler of claim 1, wherein the retrieval comparator (20) compares two kinds of the facial images from the camera (4) and stored in the validation memory (18), as to comparative items being sizes of facial outline, distances among the positions of facial features, and proportions of the distances and sizes of facial outline,
when more than any two of the comparative items match each other, the retrieval comparator (20) considers that the user who inserts the document into the inlet (12) is the same person as those stored in the validation memory (18).

11. The document handler of claim 1, wherein even if the validation memory (18) does not have stored the facial images of a person with difficulty in self-control or an antisocial person and related print images, the retrieval comparator (20) considers a person with difficulty in self-control if the user comes under any one of the followings:
a. One who has inserted documents into the same or different validator (1) over a certain amount of money within a certain period of time;
b. One who has inserted documents more than twice of different money amount into one or plural validators (1);
c. One who has inserted documents more than three times of different money amount into one or plural validators (1);
d. One who has inserted documents at a time interval over two hours into one or plural validators; or
e. One who has continuously inserted documents into a plurality of different validators more than three hours.

12. A document handler comprising a plurality of validators (1) arranged in different places, each of the validators (1) having a conveyor (17) that transports along a passageway (15) of the validator (1) a document inserted into an inlet (12) of the validator (1),
each of the validators (1) comprising:
a document sensor (16) for photoelectrically taking images of the document moving along the passageway (15) of the validator (1) to produce print image signals,
a validation controller (14) for comparing the print images received from the document sensor (16) with regular print images to judge authenticity of the document,
a camera (4) for photoelectrically taking facial images of a user who inserts the document into the validator (1) to produce the facial image signals,
a validation memory (18) for storing the print image signals from the document sensor (16), the facial image signals from the camera (4) and control codes commonly assigned to the print and facial image signals, independently of the result of the authenticity judgement by the validation controller (14), and
a retrieval comparator (20) for making a search of the facial image signals stored in the validation memory (18) through the facial images of the user to display the print images.

13. The document handler of claim 12, wherein the retrieval comparator (20) makes a search of the facial images of the same type stored in the validation memory (18) through the facial images of the user.
